# EUROPEAN PATENT APPLICATION

(11) **EP 4 524 695 A1**
(43) Date of publication of application: **19.03.2025**
(21) Application number: 23856564.2
(22) Date of filing: 21.08.2023
(51) Int. Cl.: G06F 3/041

(54) **TOUCH LAMINATED GLASS AND CONTROL APPARATUS, SYSTEM AND METHOD THEREFOR, AND CONTROL PANEL**

(30) Priority: 22.08.2022 CN 202211005412
(71) Applicant: Fuyao Glass Industry Group Co., Ltd., Fuqing, Fujian 350300 (CN)
(72) Inventor: CHEN, Hongwei, Fuqing, Fujian 350300 (CN); ZHENG, Guoxin, Fuqing, Fujian 350300 (CN); LIN, Shou, Fuqing, Fujian 350300 (CN); WANG, Wenhai, Fuqing, Fujian 350300 (CN); LI, Xin, Fuqing, Fujian 350300 (CN); LIN, Shengye, Fuqing, Fujian 350300 (CN); LI, Bangkui, Fuqing, Fujian 350300 (CN)
(74) Representative: Patentanwälte Olbricht Buchhold Keulertz
(86) International application number: PCT/CN2023/113963
(87) International publication number: WO 2024/041474

(57) **Abstract**

Embodiments of the present disclosure provide a touch laminated glass and a control apparatus, system and method therefor, and a control panel. In the method, the touch laminated glass includes a first glass, a second glass, and a display film and a touch film which are disposed between the first glass and the second glass; the display film is configured to display projection information projected by a projector; and the touch film is configured to form a capacitance signal based on a touch operation of a user, and send the capacitance signal to the control panel, thereby protecting the integrity of the display film and the touch film, providing the user with a touch operation on the entire glass area, and improving the use experience of the user, and it can also be used as vehicle glass to provide the user with an interactive function.

## Description

The present disclosure claims priority to Chinese Patent Application NO. 202211005412.5, entitled "touch laminated glass and control apparatus, system and method therefor, and control panel" and filed on August 22, 2022, which is hereby incorporated herein by reference in its entirety.

### TECHNICAL FIELD

The present disclosure relates to the technical field of touch glass, and particularly to a touch laminated glass and a control apparatus, system, method therefor, and a control panel.

### BACKGROUND

At present, the existing glass with a touch display function is usually applied to large outdoor windows of supermarket chains, airports, office buildings, etc. Display films and touch films are directly disposed on the outside of the glass, and pedestrians can directly touch and operate the glass from the outside of a building. In addition, by integrating touch buttons on the glass, the existing glass provides a touch operation function for a user.

### SUMMARY

Since pedestrians is capable of directly touching and operating glass from the outside of a building, it is easy to cause scratch and damage of a display film and a touch film in the long run, resulting in the failure of a display function and a touch function. In addition, a user can only realize the touch function of the glass through touch buttons, resulting in poor use experience of a user.

An objective of the present disclosure is to provide a touch laminated glass, which can protect the integrity of a display film and a touch film, and provide a user with a touch operation on the entire glass area, so as to improve the use experience of the user, and the touch laminated glass can also be used as vehicle glass to provide the user with an interactive function. Another objective of the present disclosure is to provide a control apparatus. Still another objective of the present disclosure is to provide a control system. Yet another objective of the present disclosure is to provide a control method. Yet another objective of the present disclosure is to provide a control panel. Yet another objective of the present disclosure is to provide a computer-readable medium. Yet another objective of the present disclosure is to provide a computer device. Yet another objective of the present disclosure is to provide a computer program product.

In order to achieve the above objectives, an aspect of the present disclosure discloses a touch laminated glass, including a first glass, a second glass, and a display film and a touch film both of which are disposed between the first glass and the second glass;
the display film is configured to display projection information projected by a projector; and
the touch film is configured to form a capacitance signal based on a touch operation of a user and send the capacitance signal to a control panel.

Exemplarily, the display film is disposed close to the first glass, and the touch film is disposed close to the second glass; or
the display film is disposed close to the second glass, and the touch film is disposed close to the first glass.

Exemplarily, the touch laminated glass further including an adhesive layer;
the first glass and the display film are adhered through the adhesive layer, the display film and the touch film are adhered through the adhesive layer, and the touch film and the second glass are adhered through the adhesive layer; or
the second glass and the display film are adhered through the adhesive layer, the display film and the touch film are adhered through the adhesive layer, and the touch film and the first glass are adhered through the adhesive layer.

Exemplarily, an area of the display film is smaller than that of the adhesive layer.

Exemplarily, an area of the touch film is smaller than that of the adhesive layer.

Exemplarily, if the touch film is disposed close to the first glass, a distance between an edge of the touch film and an edge of the first glass is 5 millimeters to 25 millimeters; and
if the touch film is disposed close to the second glass, a distance between the edge of the touch film and an edge of the second glass is 5 millimeters to 25 millimeters.

Exemplarily, if a projection mode of the projector is a front projection mode, the display film is configured as a display film for front projection use.

Exemplarily, if a projection mode of the projector is a rear projection mode, the display film is configured as a scattering film or a polymer dispersed liquid crystal film.

Exemplarily, the touch film further includes an electrode; and
the electrode is disposed inside the touch film and configured to transmit the capacitance signal to the control panel.

Exemplarily, the touch film further includes a shielding layer; and
the shielding layer is disposed on a side of the electrode and configured to shield the capacitance signal formed by the user on a side close to the shielding layer and away from the electrode.

Exemplarily, the electrode comprises a one-side electrode and has a width between 0.1 millimeter and 15 millimeters.

Exemplarily, the touch laminated glass further includes a light-shielding coating; and
the light-shielding coating is configured to cover a position where the electrode is located.

Exemplarily, the touch film includes a touch function area; and
the touch function area is configured to form a capacitance signal based on a touch operation of a user and send the capacitance signal to the control panel.

Exemplarily, the touch function area covers the whole transparent area or part thereof.

Exemplarily, the touch film and the control panel are connected through a circuit board.

The present disclosure further discloses a touch laminated glass, including an outer glass, a touch glass and a display film disposed between the outer glass and the touch glass;
the display film is configured to display projection information projected by a projector; and
the touch glass is configured to form a capacitance signal based on a touch operation of a user and send the capacitance signal to a control panel.

The present disclosure further discloses a control apparatus, including a touch laminated glass, a projector and a control panel;
the touch laminated glass is communicatively connected to the control panel, and the control panel is communicatively connected to the projector;
the touch laminated glass is configured to form a capacitance signal based on a touch operation of a user and send the capacitance signal to the control panel;
the control panel is configured to process the capacitance signal and send obtained projection information to the projector; and
the projector is configured to project the projection information to the touch laminated glass.

Exemplarily, the touch laminated glass and the control panel are connected through a circuit board.

The present disclosure further discloses a control system, including a control apparatus and a vehicle-computer system which are disposed on a vehicle body;
the control apparatus includes a touch display vehicle window, and the touch display vehicle window includes the aforementioned touch laminated glass;
the projector of the control apparatus is configured to project projection information to the touch display vehicle window; and
the vehicle-computer system is configured to monitor a vehicle parameter.

Exemplarily, the control apparatus sends a generated vehicle parameter acquisition request to the vehicle-computer system;
the vehicle-computer system sends, in response to the vehicle parameter acquisition request, vehicle parameter information to the projector; and
the projector projects the vehicle parameter information to the touch display vehicle window.

Exemplarily, the vehicle-computer system inquires , in response to a projector turn-on instruction, whether the touch display vehicle window is in a raised state; if the touch display vehicle window is in the raised state, the turn-on instruction is sent to the projector to turn on the projector; if the touch display vehicle window is in a not raised state, the touch display vehicle window is controlled to rise until the touch display vehicle window is in the raised state, and the turn-on instruction is sent to the projector to turn on the projector.

Exemplarily, when the projector is in a turn-on state, if the touch display vehicle window is in a descended state, the vehicle-computer system is further configured to send a light-emission pause instruction to the projector, so as to pause light emitted from the projector.

Exemplarily, the vehicle-computer system is further configured to send a sound keeping instruction to the projector, so as to keep normal working of a speaker of the projector.

Exemplarily, the vehicle parameter comprises a vehicle on-off state, and the vehicle on-off state comprises a locked state, an unlocked state and a driving state; if a vehicle is changed from the locked state to the unlocked state, the vehicle-computer system sends a welcome turn-on instruction to the projector; and
the projector projects, in response to the welcome turn-on instruction, a preset welcome image to the touch display vehicle window.

Exemplarily, if the vehicle is changed from the unlocked state to the driving state, the vehicle-computer system sends a welcome turn-off instruction to the projector; and
the projector stops, in response to the welcome turn-off instruction, projecting the welcome image to the touch display vehicle window.

Exemplarily, the control system further includes a user terminal which is communicatively connected to the vehicle-computer system;
the vehicle-computer system sends, in response to the welcome turn-on instruction sent by the user terminal, the welcome turn-on instruction to the projector, and the welcome turn-on instruction is input by the user through the user terminal; and
the projector projects, in response to the welcome turn-on instruction, a preset welcome image to the touch display vehicle window in a rear projection mode.

The present disclosure further discloses a control method, including:
performing signal processing on a capacitance signal generated by a touch laminated glass to obtain projection information, and the capacitance signal is formed by the touch laminated glass based on a touch operation of a user; and
sending the projection information to a projector, so that the projector projects the projection information to the touch laminated glass.

Exemplarily, the capacitance signal including an unlocking signal, and the projection information includes a welcome image; and
the performing signal processing on the capacitance signal generated by the touch laminated glass to obtain the projection information includes:
generating, in response to the unlocking signal, a welcome image.

Exemplarily, the method further includes:
sending the unlocking signal to a vehicle-computer system, so that the vehicle-computer system unlocks a vehicle.

Exemplarily, the capacitance signal includes an unlocking request, and the projection information includes a preset unlocking code; and
the performing signal processing on the capacitance signal generated by the touch laminated glass to obtain the projection information includes:
acquiring, in response to the unlocking request, a preset unlocking code.

The present disclosure further discloses a control panel, including:
a signal processing unit configured to process a capacitance signal generated by a touch laminated glass to obtain projection information, and the capacitance signal is formed by the touch laminated glass based on a touch operation of a user; and
a sending unit configured to send the projection information to a projector, so that the projector projects the projection information to the touch laminated glass.

The present disclosure further discloses a computer-readable medium, storing a computer program, and when executed by a processor, the program implements the aforementioned method.

The present disclosure further discloses a computer device, including a memory and a processor, and the memory is configured to store information including program instructions, and the processor is configured to control the execution of the program instructions, and when executed by the processor, the programs implement the aforementioned method.

The present disclosure further discloses a computer program product including a computer program/instruction, and when executed by a processor, the computer program/instruction implements the aforementioned method.

The present disclosure provides a touch laminated glass, including a first glass, a second glass, and a display film and a touch film which are disposed between the first glass and the second glass; the display film is configured to display projection information projected by a projector; the touch film is configured to form a capacitance signal based on a touch operation of a user and send the capacitance signal to a control panel, which can protect the integrity of the display film and the touch film, and provide the user with the touch operation on the entire glass area, so as to improve the use experience of the user, and the touch laminated glass can also be used as vehicle glass to provide the user with an interactive function.

### BRIEF DESCRIPTION OF THE DRAWINGS

In order to more clearly illustrate the technical solutions in the embodiment of the present disclosure or in the prior art, the drawings required in the description of the embodiments or the prior art will be briefly introduced below. Obviously, the drawings involved in the following description only illustrate some embodiments of the present disclosure, and those of ordinary skill in the art may obtain other drawings from these drawings without paying any creative effort.
FIG. 1 illustrates a cross-sectional diagram of a touch laminated glass according to an embodiment of the present disclosure;
FIG. 2 illustrates a planar structural diagram of a touch display vehicle window according to an embodiment of the present disclosure;
FIG. 3 illustrates a schematic diagram of a touch function area according to an embodiment of the present disclosure;
FIG. 4 illustrates a schematic diagram of another touch function area according to an embodiment of the present disclosure;
FIG. 5 illustrates a cross-sectional diagram of another touch laminated glass according to an embodiment of the present disclosure;
FIG. 6 illustrates a cross-sectional diagram of still another touch laminated glass according to an embodiment of the present disclosure;
FIG. 7 illustrates a structural diagram of a control apparatus according to an embodiment of the present disclosure;
FIG. 8 illustrates a structural diagram of a control system according to an embodiment of the present disclosure;
FIG. 9 illustrates a flowchart of a control method according to an embodiment of the present disclosure;
FIG. 10 illustrates a structural diagram of a control panel according to an embodiment of the present disclosure; and
FIG. 11 illustrates a structural diagram of a computer device according to an embodiment of the present disclosure.

### DESCRIPTION OF THE EMBODIMENTS

The technical solutions in the embodiments of the present disclosure will be clearly and completely described below with reference to the drawings in the embodiments of the present disclosure. Obviously, those described are only a part, rather than all, of the embodiments of the present disclosure. Based on the embodiments in the present disclosure, any other embodiment obtained by those of ordinary skill in the art without paying any inventive effort should fall within the protection scope of the present disclosure.

In order to facilitate the understanding of the technical solutions of the present disclosure, the related contents of the technical solutions of the present disclosure will be firstly illustrated below. The present disclosure relates to a transparent display design applied to a touch laminated glass, and the display design is realized by means of projection. The touch laminated glass is applied to a vehicle as a touch display vehicle window, and the touch display vehicle window is configured to carry display projection information. Specifically, through a projector disposed in the vehicle and a display film disposed in the touch display vehicle window, the projection information is projected to the touch display vehicle window, thereby providing vehicle information and interactive entertainment to a user and enriching the functions of the vehicle window. When the projector is turned off, the vehicle window can also remain transparent to maintain the original functions of lighting and scenery viewing. Meanwhile, in combination with a function of capacitive touch, a human-computer interaction function is realized on the touch display vehicle window through a touch function area divided on the touch film.

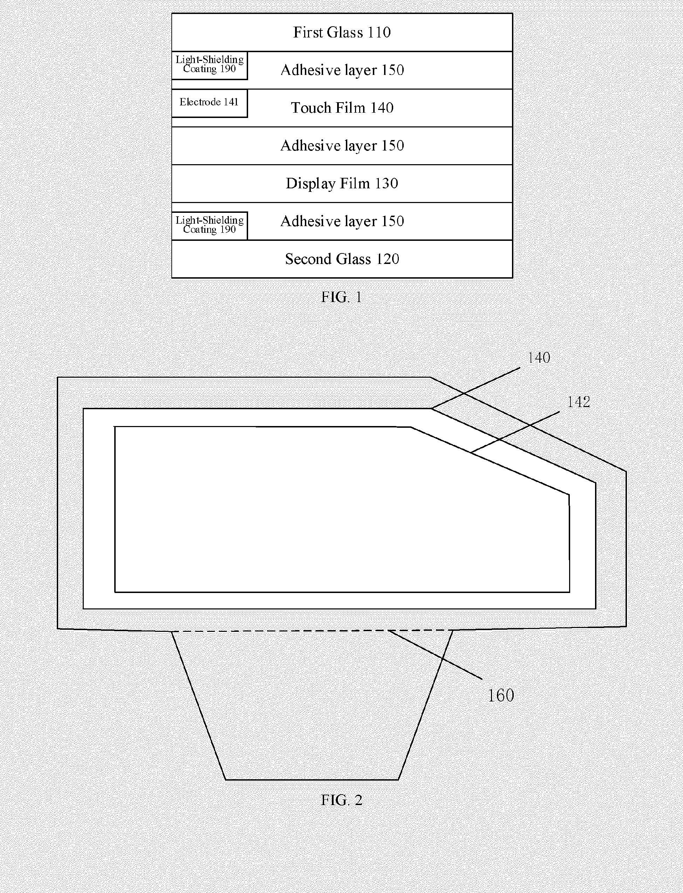

FIG. 1 illustrates a cross-sectional diagram of a touch laminated glass according to an embodiment of the present disclosure. As illustrated in FIG. 1, the touch laminated glass includes a first glass 110 and a second glass 120, and a display film 130 and a touch film 140 both of which are disposed between the first glass 110 and the second glass 120.

The display film 130 is configured to display projection information projected by a projector. The projection information includes, but is not limited to, a vehicle parameter, an interactive screen and a welcome image.

The touch film 140 is configured to form a capacitance signal based on a touch operation of a user and send the capacitance signal to a control panel.

In some embodiments, the display film and the touch film are disposed in the laminated glass composed of the first glass and the second glass, so as to effectively protect the display film and the touch film, prevent the display film and the touch film from being scratched, and increase the reliability of the touch laminated glass.

In some embodiments, the display film 130 is disposed close to the first glass 110, and the touch film 140 is disposed close to the second glass 120. Alternatively, the display film 130 is disposed close to the second glass 120, and the touch film 140 is disposed close to the first glass 110.

To be noted, the display film and the touch film are only required to be disposed between the first glass and the second glass, and the relative positions of the display film and the touch film with respect to the first glass and the second glass are not limited.

As illustrated in FIG. 1, the touch laminated glass further includes an adhesive layer 150. As an optional solution, the adhesive layer 150 is 0.38 PVB, i.e., polyvinyl butyral (PVB) with a thickness of 0.38 millimeters (mm), or any other thickness such as 0.76 millimeters (mm), etc. PVB is a universal adhesive film for the laminated glass of vehicles.

The first glass 110 and the display film 130 are adhered through the adhesive layer 150, the display film 130 and the touch film 140 are adhered through the adhesive layer 150, and the touch film 140 and the second glass 120 are adhered through the adhesive layer 150. Alternatively, the second glass 120 and the display film 130 are adhered through the adhesive layer 150, the display film 130 and the touch film 140 are adhered through the adhesive layer 150, and the touch film 140 and the first glass 110 are adhered through the adhesive layer 150.

As an optional solution, the touch laminated glass is applied to a vehicle as a touch display vehicle window, and the first glass 110 is used as an outer glass and the second glass 120 is used as an inner glass. As an exemplary solution, the display film 130 is disposed close to the second glass 120, and the touch film 140 is disposed close to the first glass 110, i.e., the display film is on a side close to an interior of the vehicle, and the touch film is on a side close to an exterior of the vehicle; and the display film provides displayed projection information to a user inside the vehicle or a user outside the vehicle.

In some embodiments, an area of the display film 130 is smaller than that of the adhesive layer 150, so that the touch laminated glass can be adhered more firmly, the reliability of the touch laminated glass can be ensured, and at the same time, the increase of the unnecessary cost caused by an over-large area of the display film can be avoided.

In some embodiments, the area of the touch film 140 is smaller than that of the adhesive layer 150, so that the touch laminated glass can be adhered more firmly, the reliability of the touch laminated glass can be ensured, and at the same time, the increase of the unnecessary cost caused by an over-large area of the touch film can be avoided.

It should be noted that a size relationship between the area of the display film 130 and the area of the touch film 140 is not limited in the present disclosure.

In some embodiments, if the touch film 140 is disposed close to the first glass 110, a distance between an edge of the touch film 140 and an edge of the first glass 110 is 5 millimeters (mm) to 25 millimeters (mm); and if the touch film 140 is disposed close to the second glass 120, a distance between the edge of the touch film 140 and an edge of the second glass 120 is 5 millimeters (mm) to 25 millimeters (mm).

In some embodiments, a touch accuracy of the touch film 140 is 1 millimeter (mm) to 5 millimeters (mm); and a thickness of the touch film 140 is 0.2 millimeters (mm) to 0.7 millimeters (mm), and as an exemplary solution, the thickness of the touch film 140 is 0.33 millimeters (mm) to 0.43 millimeters (mm).

In some embodiments, the display film 130 provides displayed projection information to a user inside the vehicle or a user outside the vehicle. When the projection information is provided to the user in the vehicle through the display film, the projection mode of the projector is a front projection mode. As an exemplary solution, the display film 130 is, but not limited to, a transparent display film for front projection use, exemplarily a photonic film. When the projection information is provided to the user outside the vehicle through the display film, the projection mode of the projector is a rear projection mode, and the display film is configured as a scattering film or a Polymer Dispersed Liquid Crystal (PDLC) film.

In some embodiments, the touch film 140 further includes an electrode 141.

The touch film 140 has a multi-layer structure, and the electrode 141 is disposed inside the touch film 140. The electrode 141 provides a capacitive channel for the capacitance signal, so as to transmit the capacitance signal to a control panel. The capacitance signal is formed based on the touch operation of the user. As an optional solution, the electrode 141 includes but is not limited to a one-side electrode, and has a width between 0.1 mm and 15 mm, exemplarily between 4 mm and 9 mm.

In some embodiments, the touch film 140 further includes a shielding layer.

The shielding layer is disposed on a side of the electrode 141 and configured to shield a capacitance signal formed by the user on a side close to the shielding layer and away from the electrode 141.

For example, the first glass 110 is used as the outer glass, and the second glass 120 is used as the inner glass. Specifically, if the shielding layer is disposed between the second glass 120 and the electrode 141, the shielding layer shields a capacitance signal formed by the touch operation of the user through the second glass 120, and the electrode 141 can only receive the capacitance signal formed by the touch operation of the user through the first glass 110, i.e., the touch function is only provided for the user outside the vehicle. If the shielding layer is disposed between the first glass 110 and the electrode 141, the shielding layer shields the capacitance signal formed by the touch operation of the user through the first glass 110, and the electrode 141 can only receive the capacitance signal formed by the touch operation of the user through the second glass 120, i.e., the touch function is only provided for the user inside the vehicle.

In some embodiments, the touch laminated glass further includes a light-shielding coating 190.

For the aesthetic appearance of the touch laminated glass, the light-shielding coating 190 is configured to cover the edge of the display film 130 and the position where the electrode 141 is located. As an optional solution, the electrode 141 is covered with width ranges between 5 millimeters (mm) and 15 millimeters (mm).

As an optional solution, the touch laminated glass is applied to the vehicle as a touch display vehicle window. FIG. 2 illustrates a planar structural diagram of a touch display vehicle window according to an embodiment of the present disclosure. As illustrated in FIG. 2, the touch film 140 includes a touch function area 142.

The touch function area 142 is configured to form a capacitance signal based on a touch operation of a user and send the capacitance signal to a control panel. The touch function area 142 is a pre-divided area on the touch film 140, and is provided with but not limited to an indium tin oxide (ITO) conducting film, a nano silver wire film, a copper wire film, etc. The electrode 141 can only receive the capacitance signal formed in the touch function area 142 and send the capacitance signal to the control panel.

As illustrated in FIG. 2, the touch display vehicle window includes a waterline 160, which is not an actual line, but only configured to divide the window into a visible part and an invisible part. That is, the waterline 160 is at a position of a rubber sealing strip in a groove at a lower edge of the door glass. A part above the waterline 160 is a transparent area visible to the user, with a glass transmittance more than 50%, and a part below the waterline 160 is embedded inside the vehicle body and is an area invisible to the user.

As an optional solution, the lower edge of the touch film 140 and the lower electrode line are disposed above the waterline 160 to shield the electrode line.

To be noted, the touch function area 142 is strictly controlled to be above the waterline 160, so as to prevent an accidental touch caused by the interaction between the user and the vehicle door.

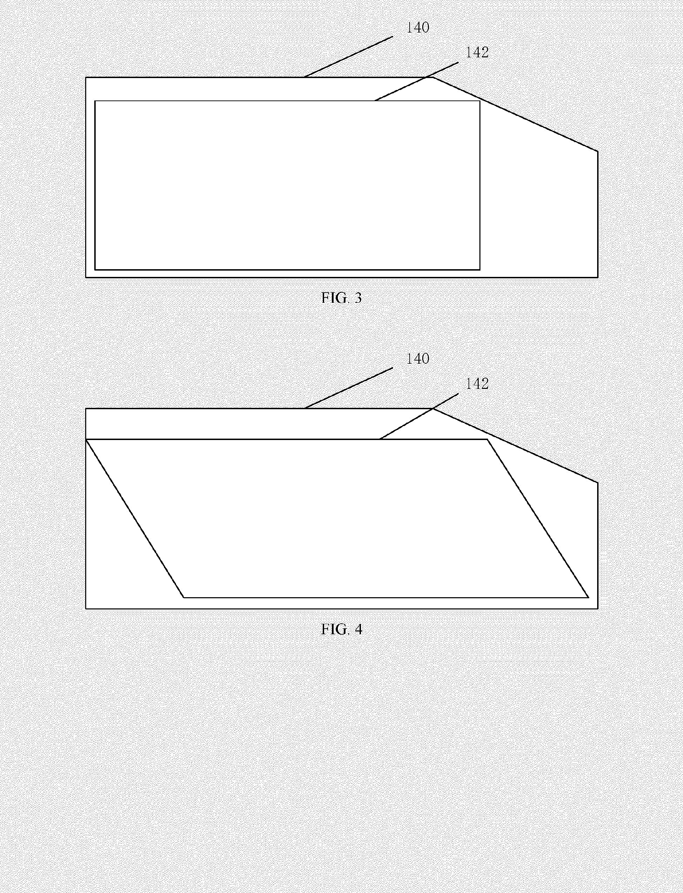

Due to the glass shaping, the touch function area does not completely fill the area of the touch film, and the touch function area covers the whole transparent area or part thereof. FIG. 3 illustrates a schematic diagram of a touch function area according to an embodiment of the present disclosure. As illustrated in FIG. 3, the touch function area 142 is square, and a user can perform a touch operation in the square touch function area 142 to form a capacitance signal.

FIG. 4 illustrates a schematic diagram of another touch function area according to an embodiment of the present disclosure. As illustrated in FIG. 4, the touch function area 142 is a parallelogram, and a user can perform a touch operation in the touch function area 142 of the parallelogram to form a capacitance signal.

To be noted, the transparent area covered by the touch function area may also be irregular, and the shape of the transparent area covered by the touch function area is not limited in the present disclosure.

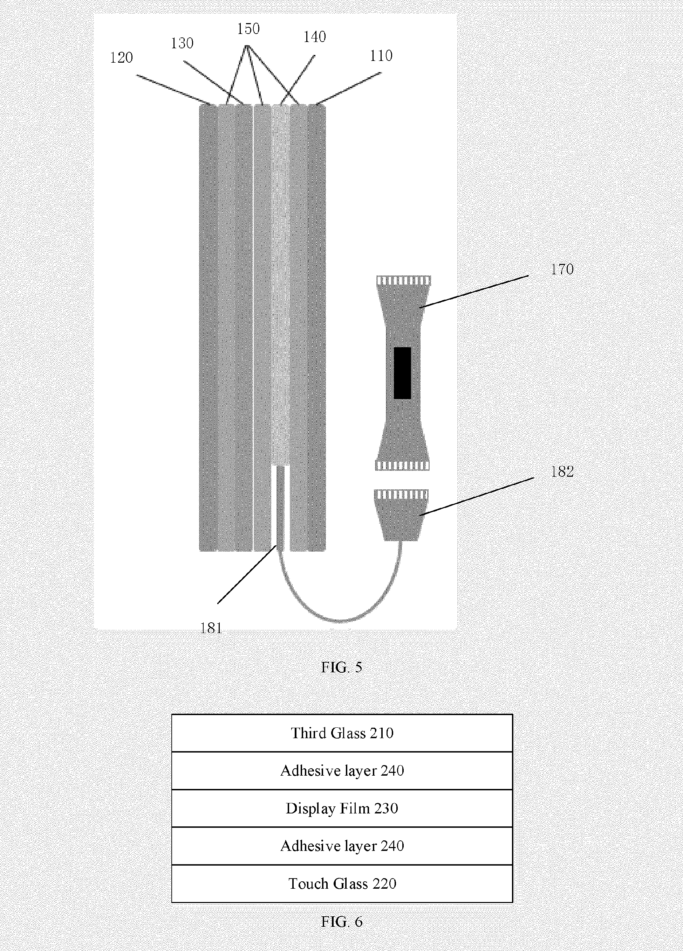

FIG. 5 illustrates a cross-sectional diagram of another touch laminated glass according to an embodiment of the present disclosure. As illustrated in FIG. 5, the touch film 140 and the control panel 170 are connected through a circuit board that may be a flexible printed circuit board (FPC) or a printed circuit board (PCB). In an example where the circuit board is an FPC, the touch film 140 is connected by an FPC 181 that is connected to the control panel 170 through an FPC interface 182, and then the control panel 170 is connected to a projector or a vehicle-computer system through the FPC 181. To be noted, the control panel 170 may be designed as a flexible panel disposed on the FPC, or a conventional PCB, so as to prevent the control panel from participating in the high-temperature and high-pressure glass manufacturing process and prevent the control panel from being damaged.

As another optional solution, FIG. 6 illustrates a cross-sectional diagram of still another touch laminated glass according to an embodiment of the present disclosure, and the touch laminated glass includes a third glass 210, a touch glass 220 and a display film 230 disposed between the third glass 210 and the touch glass 220.

The display film 230 is configured to display projection information projected by a projector.

The touch glass 220 is configured to form a capacitance signal based on a touch operation of a user and send the capacitance signal to a control panel. An ITO conducting film is directly formed on the glass and the touch glass 220 is formed by sensors, and it is also possible to adopt other types of interactive response mechanisms, such as nano-silver wires, copper wires or the like. In which, the sensor may be a capacitive sensor.

In some embodiments, the touch glass 220 includes a touch module and a fourth glass, and the touch module is disposed on the fourth glass, a thickness of the fourth glass is between 0.55 millimeters (mm) and 2.1 millimeters (mm), and the fourth glass itself is a flat thin glass, which is directly attached to the tempered and formed third glass 210 at a high temperature and a high pressure to form the touch laminated glass.

As illustrated in FIG. 6, in some embodiments, the touch laminated glass further includes an adhesive layer 240.

The third glass 210 and the display film 230 are adhered through the adhesive layer 240, and the display film 230 and the touch glass 220 are adhered through the adhesive layer 240.

It should be noted that except for the touch film structure, the touch laminated glass illustrated in FIG. 6 has the same function and structure as the touch laminated glass illustrated in FIG. 1, which will not be repeated here.

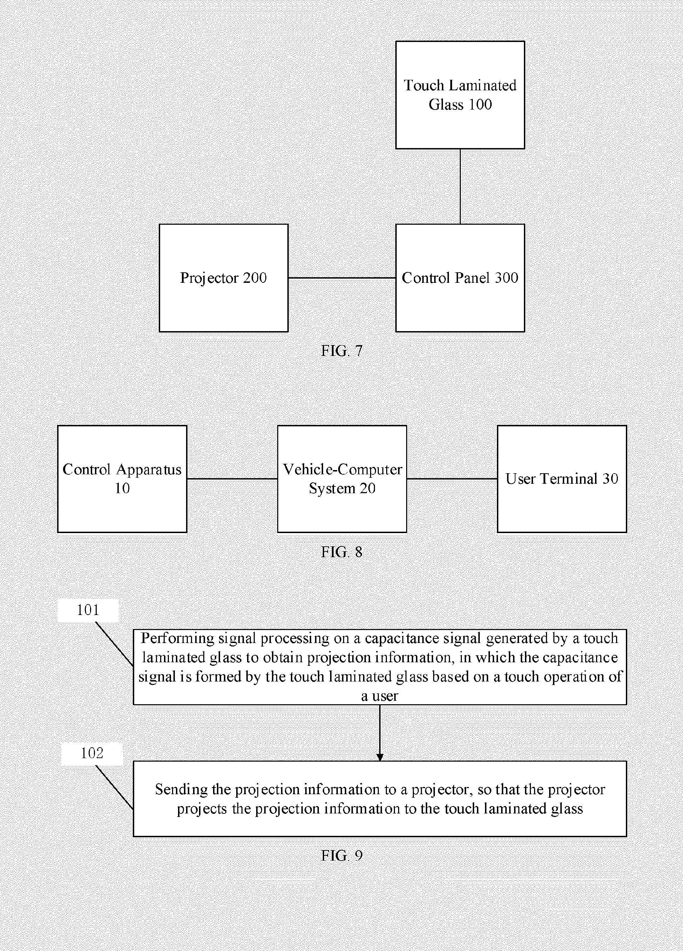

FIG. 7 illustrates a structural diagram of a control apparatus according to an embodiment of the present disclosure. As illustrated in FIG. 7, a control apparatus includes a touch laminated glass 100, a projector 200 and a control panel 300, and the touch laminated glass 100 is communicatively connected to the control panel 300, and the control panel 300 is communicatively connected to the projector 200.

The touch laminated glass 100 is configured to form a capacitance signal based on a touch operation of a user and send the capacitance signal to the control panel 300.

The control panel 300 is configured to process the capacitance signal and send obtained projection information to the projector 200.

To be noted, the control panel 300 should be as close as possible to the touch film, and touch response time should be less than or equal to 50 ms. As an exemplary solution, the touch response time is less than or equal to 15 ms. The control panel 300 is disposed on the touch laminated glass 100 to move therewith, and has a three-proof design (i.e., mildew-proof, moistureproof and salt fog-proof), so as to adapt to various environments and ensure the reliability. In an embodiment, the control panel may also be disposed in a vehicle door.

The projector 200 is configured to project the projection information to the touch laminated glass 100.

In some embodiments, the touch laminated glass 100 and the control panel 300 are connected through a circuit board.

Taking a scenario where the touch laminated glass is applied to a vehicle as a touch display vehicle window as an example, FIG. 8 illustrates a structural diagram of a control system according to an embodiment of the present disclosure. As illustrated in FIG. 8, a control system includes a control apparatus 10 and a vehicle-computer system 20 which are disposed on a vehicle body, the control apparatus 10 includes a touch display vehicle window, and the touch display vehicle window includes the touch laminated glass as illustrated in FIG. 1 or FIG. 6.

The projector 200 of the control apparatus 10 is configured to project projection information to the touch display vehicle window.

The vehicle-computer system 20 is configured to monitor a vehicle parameter, and the vehicle parameter includes but not limited to a fuel consumption of the vehicle, a mileage of the vehicle and a tire pressure of the vehicle.

In some embodiments, the control apparatus 10 sends a generated vehicle parameter acquisition request to the vehicle-computer system 20, the vehicle-computer system 20 sends, in response to the vehicle parameter acquisition request, vehicle parameter information to the projector 200; the projector 200 projects the vehicle parameter information to the touch display vehicle window. In this embodiment, the vehicle parameter acquisition request is generated by the control panel in response to the capacitance signal; and the vehicle parameter information may be the vehicle parameter or image information including the vehicle parameter or video information including the vehicle parameter.

In some embodiments, the function of the projector 200 is completely related to a raised state of the touch display vehicle window. Specifically, the vehicle-computer system 20 inquires, in response to a projector turn-on instruction, whether the touch display vehicle window is in a raised state; if the touch display vehicle window is in the raised state, the turn-on instruction is sent to the projector 200 to turn on the projector; if the touch display vehicle window is in a not raised state, the touch display vehicle window is controlled to rise until the touch display vehicle window is in the raised state, and the turn-on instruction is sent to the projector 200 to turn on the projector; and the touch function is turned on synchronously with the projector 200.

To be noted, in some embodiments, the raising extent of the touch display vehicle window is not limited, i.e., the projector may be turned on after the touch display vehicle window is completely raised, or when the touch display vehicle window is raised to a certain height.

In some embodiments, when the projector 200 is in a turn-on state, if the touch display vehicle window is in a descended state, the vehicle-computer system 20 is further configured to send a light-emission pause instruction to the projector 200, so as to pause light emitted from the projector 200. The vehicle-computer system 20 is further configured to send a sound keeping instruction to the projector 200, so as to keep the normal working of a speaker of the projector 200. When the touch display vehicle window descends, the projector 200 pauses light emission, but the sound is kept turned on, and the user can still hear the radio or music.

Further, if a stop instruction is sent to the projector 200 or the whole vehicle is powered off, the projector 200 is turned off, and the touch function is turned off synchronously with the projector 200.

In some embodiments, the vehicle parameter further includes a vehicle on-off state, and the vehicle on-off state includes a locked state, an unlocked state and a driving state, in which the driving state is a state in which the vehicle is driven.

If the vehicle is changed from the locked state to the unlocked state, the vehicle-computer system 20 sends a welcome turn-on instruction to the projector 200, the projector 200 projects, in response to the welcome turn-on instruction, a preset welcome image to the touch display vehicle window. Specifically, the projector 200 projects the preset welcome image to the touch display vehicle window in a rear projection mode.

If the vehicle is changed from the unlocked state to the driving state, the vehicle-computer system 20 sends a welcome turn-off instruction to the projector 200, the projector 200 stops, in response to the welcome turn-off instruction, projecting the welcome image to the touch display vehicle window.

As illustrated in FIG. 8, the control system further includes a user terminal 30 which is communicatively connected to the vehicle-computer system 20.

The vehicle-computer system 20 sends, in response to the welcome turn-on instruction sent by the user terminal 30, the welcome turn-on instruction to the projector 200, in which the welcome turn-on instruction is input by the user through the user terminal 30; and the projector 200 projects, in response to the welcome turn-on instruction, a preset welcome image to the touch display vehicle window in a rear projection mode.

Specifically, in the running scenario of an online car-hailing, when there is no passenger in the vehicle, the projector 200 may project the projection information, including but not limited to news and advertising information, to the touch display vehicle window. When the online car-hailing receives a passenger, a driver clicks a button of passenger reception on the user terminal 30 to input a welcome turn-on instruction; the user terminal 30 sends the welcome turn-on instruction to the projector 200; and the projector 200 projects a preset welcome image to the touch display vehicle window in a rear projection mode.

In the technical solution according to the embodiment of the present disclosure, the touch laminated glass includes a first glass, a second glass, and a display film and a touch film both of which are disposed between the first glass and the second glass; the display film is configured to display projection information projected by a projector; the touch film is configured to form a capacitance signal based on a touch operation of a user and send the capacitance signal to a control panel, which can protect the integrity of the display film and the touch film, and provide the user with the touch operation on the entire glass area, so as to improve the use experience of the user, and the touch laminated glass can also be used as vehicle glass to provide the user with an interactive function.

To be noted, the touch laminated glass system illustrated in FIG. 8 is also applicable to the control method illustrated in FIG. 9, and will not be repeated here.

The implementation process of the control method according to an embodiment of the present disclosure is described below through an example in which the control panel is taken as an executive subject. It can be understood that the executive subject of the control method of the present disclosure includes but is not limited to the control panel.

FIG. 9 illustrates a flowchart of a control method according to an embodiment of the present disclosure. As illustrated in FIG. 9, the method includes:
Step 101: performing signal processing on a capacitance signal generated by a touch laminated glass to obtain projection information, in which the capacitance signal is formed by the touch laminated glass based on a touch operation of a user.

In some embodiments, the capacitance signal includes an unlocking signal, and the projection information includes a welcome image. Specifically, the user performs a touch operation of unlocking on the touch laminated glass to generate an unlocking signal; and the control panel generates, in response to the unlocking signal, the welcome image.

Further, the user control panel sends the unlocking signal to a vehicle-computer system, and the vehicle-computer system unlocks, in response to the unlocking signal, a vehicle.

As another optional solution, the capacitance signal includes an unlocking request, and the projection information includes an unlocking code. The user performs a touch operation of unlocking on the touch laminated glass to generate an unlocking request, and in response to the unlocking request, the control panel acquires and sends a preset unlocking code to a projector. To be noted, the unlocking code in the present disclosure may be a two-dimensional code, a bar code, or a code of any other form, and the specific form of the unlocking code is not limited in the present disclosure.

As another optional solution, the capacitance signal includes a vehicle parameter acquisition request, and the projection information includes a vehicle parameter. The user performs a touch operation on the touch laminated glass to request acquiring the vehicle parameter to generate a vehicle parameter acquisition request; the control panel sends, in response to the vehicle parameter acquisition request, the vehicle parameter acquisition request to a vehicle-computer system; and the vehicle-computer system acquires and sends, in response to the vehicle parameter acquisition request, the vehicle parameter to a projector.

Step 102: sending the projection information to a projector, so that the projector projects the projection information to the touch laminated glass.

In some embodiments, if the projection information includes a welcome image, the projector projects the welcome image to the touch laminated glass to realize a welcome function for the user.

As another optional solution, if the projection information includes the unlocking code, the projector projects the unlocking code to the touch laminated glass. The user may scan and verify the unlocking code through the user terminal to unlock the vehicle.

As another optional solution, if the projection information includes the vehicle parameter, the projector projects the vehicle parameter information to the touch laminated glass. In this embodiment, the vehicle parameter includes but are not limited to a fuel consumption of the vehicle, a mileage of the vehicle and a tire pressure of the vehicle.

To be noted, the acquisition, storage, use, processing, etc. of the data in the technical solutions of the present disclosure are in compliance with the relevant provisions of the national laws and regulations. Any user information in the embodiments of the present disclosure is obtained through legal and compliant channels, and the acquisition, storage, use, processing, etc. of the user information are authorized and agreed by customers.

In the technical solutions of the control method according to some embodiments, the capacitance signal generated by the touch laminated glass is subjected to signal processing to obtain the projection information, and the capacitance signal is formed by the touch laminated glass based on the touch operation of the user; the projection information is sent to the projector, so that the projector projects the projection information to the touch laminated glass, which can protect the integrity of the display film and the touch film, provide the user with the touch operation on the entire glass area, so as to improve the use experience of the user, and the touch laminated glass can also be used as vehicle glass to provide the user with an interactive function.

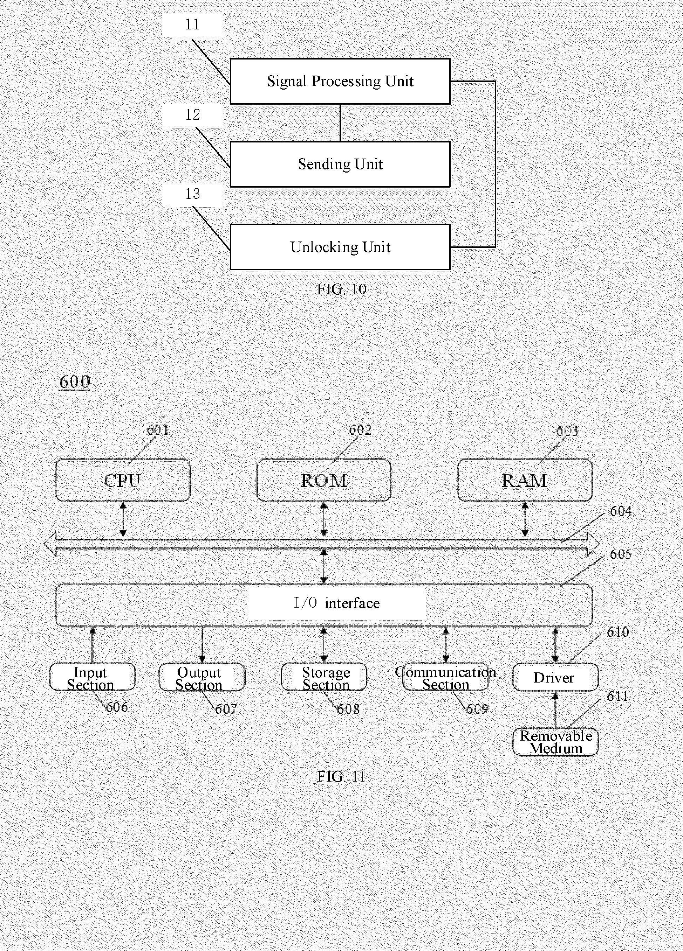

FIG. 10 illustrates a structural diagram of a control panel according to an embodiment of the present disclosure, and the control panel is configured to perform the control method. As illustrated in FIG. 10, the device includes a signal processing unit 11 and a sending unit 12.

The signal processing unit 11 is configured to process a capacitance signal generated by a touch laminated glass to obtain projection information, and the capacitance signal is formed by the touch laminated glass based on a touch operation of a user.

The sending unit 12 is configured to send the projection information to a projector, so that the projector projects the projection information to the touch laminated glass.

In some embodiments, the capacitance signal includes an unlocking signal, and the projection information includes a welcome image. The signal processing unit 11 is specifically configured to generate, in response to the unlocking signal, the welcome image.

In some embodiments, the control panel further includes an unlocking unit 13.

The unlocking unit 13 is configured to send the unlocking signal to a vehicle-computer system, so that the vehicle-computer system unlocks a vehicle.

In some embodiments, the capacitance signal includes an unlocking request, and the projection information includes a preset unlocking code; the signal processing unit 11 is specifically configured to acquire, in response to the unlocking request, the preset unlocking code.

In the solution of the embodiment of the present disclosure, the capacitance signal generated by the touch laminated glass is subjected to obtain the projection information, and the capacitance signal is formed by the touch laminated glass based on the touch operation of the user; the projection information is sent to the projector, so that the projector projects the projection information to the touch laminated glass, which can protect the integrity of the display film and the touch film, provide the user with the touch operation on the entire glass area, so as to improve the use experience of the user, and the touch laminated glass can also be used as vehicle glass to provide the user with an interactive function.

The system, apparatus, modules or units set forth in the above embodiments may be specifically implemented by computer chips or entities, or by products with certain functions. A typical implementation device is a computer device. Specifically, the computer device may be, for example, a personal computer, a laptop computer, a cellular phone, a camera phone, an intelligent phone, a personal digital assistant, a media player, a navigation device, an email device, a game console, a tablet computer, a wearable device or any combination thereof.

An embodiment of the present disclosure provides a computer device, which includes a memory and a processor, and the memory is configured to store information including program instructions, and the processor is configured to control the execution of the program instructions; when loaded and executed by the processor, the program instructions implement the steps of the embodiment of the control method of the touch laminated glass; for the detailed description, please refer to the embodiment of the control method of the touch laminated glass.

Reference is now made to FIG. 11, which illustrates a structural diagram of a computer device 600 suitable for implementing the embodiments of the present disclosure.

As illustrated in FIG. 11, the computer device 600 includes a Central Processing Unit (CPU) 601, which can perform various appropriate works and processing according to a program stored in a read-only memory (ROM) 602 or a program loaded into a Random Access Memory (RAM) 603 from a storage section 608. In the RAM 603, various programs and data required for the operation of the computer device 600 are also stored. The CPU 601, the ROM 602, and the RAM603 are connected to each other through a bus 604. An Input/Output (I/O) interface 605 is further connected to the bus 604.

The following components are connected to the I/O interface 605: an input section 606 including a keyboard, a mouse, etc.; an output section 607 including a Cathode Ray Tube (CRT), a Liquid Crystal Display (LCD), a speaker, etc.; a storage section 608 including a hard disk, etc.; and a communication section 609 including a network interface card such as a LAN (Local Area Network) card, a modem, etc. The communication section 609 performs communication processing via a network such as the Internet. A driver 610 is further connected to the I/O interface 605 as needed. A removable medium 611, such as a magnetic disk, an optical disk, a magneto-optical disk, a semiconductor memory, or the like is installed on the drive 610 as needed, so that a computer program read therefrom can be installed in the storage section 608 as needed.

Particularly, according to the embodiments of the present disclosure, the procedure described above with reference to the flowchart may be implemented as a computer software program. For example, an embodiment of the present disclosure includes a computer program product including a computer program tangibly included on a machine-readable medium, and the computer program includes program codes for performing the method illustrated in the flowchart. In such embodiment, the computer programs may be downloaded and installed from a network through the communication section 609 and/or installed from the removable medium 611.

The computer-readable medium includes media of permanent and non-permanent, removable and non-removable, and can realize the information storage in any method or technique. The information can be computer readable instructions, data structures, program modules or other data. An example of the computer storage medium includes, but not limited to, a phase change memory (PRAM), a static random access memory (SRAM), a dynamic random access memory (DRAM), other types of random access memory (RAM), a read-only memory (ROM), an electrically-erasable programmable read-only memory (EEPROM), a flash memory or other memory techniques, a compact disk read only memory (CD-ROM), a digital versatile disc (DVD) or other optical storages, magnetic cassette tapes, magnetic diskettes or other magnetic storage device or any other non-transmission medium, which can be used to the storage of information accessible to a computing device. According to the definitions herein, the computer readable medium does not include any temporary computer readable media (transitory media), such as modulated data signal and carrier wave.

For the convenience of description, the foregoing apparatus is described by being divided into various units in terms of functions. Of course, the functions of the units may be implemented in one or more pieces of software and/or hardware during the implementation of the present disclosure.

The present disclosure is described with reference to a flowchart and/or a block diagram of the method, device (system) and computer program product according to the embodiments of the present disclosure. It shall be appreciated that each flow and/or block in the flowchart and/or the block diagram and a combination of flows and/or blocks in the flowchart and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce devices for realizing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device, and the instructing device realizes function(s) specified in one or more flows in the flowchart and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing function(s) specified in one or more flows in the flowchart and/or one or more blocks in the block diagram.

Further to be noted, the term "comprise", "include" or any other variant intends to cover the non-exclusive inclusions, so that a process, a method, a commodity or a device including a series of elements include not only those elements, but also other elements not explicitly listed, or further include inherent elements of such process, method, commodity or device. In a case where there is no further limitation, the elements defined by a sentence "comprising a ..." do not exclude other identical elements existing in the process, method, commodity or device comprising the same elements.

The acquisition, storage, use, processing, etc. of the data in the technical solutions of the present disclosure are in compliance with the relevant provisions of the national laws and regulations.

Those skilled in the art should appreciate that any embodiment of the present disclosure can be provided as a method, a system or a computer program product. Therefore, the present disclosure can take the form of a full hardware embodiment, a full software embodiment, or an embodiment combining software and hardware. Moreover, the present disclosure can take the form of a computer program product implemented on one or more computer usable storage mediums (including, but not limited to, a magnetic disc memory, CD-ROM, optical storage, etc.) containing therein computer usable program codes.

The present disclosure may be described in the general context of computer executable instructions executed by the computer, e.g., the program module. In general, the program module includes routine, program, object, component, data structure, etc. executing a particular task or realizing a particular abstract data type. The present disclosure may also be put into practice in the distributed computing environments where tasks are executed by remote processing devices connected through a communication network. In the distributed computing environments, the program modules may be located in the local and remote computer storage medium including the storage device.

The embodiments herein are all described in a progressive manner, and the same or similar parts of the embodiments can refer to each other. Each embodiment lays an emphasis on its distinctions from other embodiments. In particular, the system embodiment is simply described since it is substantially similar to the method embodiment, and please refer to the descriptions of the method embodiment for the relevant part.

Those described above are just embodiments of the present disclosure, rather than limitations thereto. For those skilled in the art, the present disclosure may have various amendments or variations. Any amendment, equivalent substitution, improvement, etc. made under the spirit and principle of the present disclosure should fall within the scope of the claims of the present disclosure.

## Claims

1. A touch laminated glass, comprising a first glass, a second glass, and a display film and a touch film which are disposed between the first glass and the second glass;
the display film is configured to display projection information projected by a projector; and
the touch film is configured to form a capacitance signal based on a touch operation of a user and send the capacitance signal to a control panel.

2. The touch laminated glass according to claim 1, wherein the display film is disposed close to the first glass, and the touch film is disposed close to the second glass; or
the display film is disposed close to the second glass, and the touch film is disposed close to the first glass.

3. The touch laminated glass according to claim 1, further comprising an adhesive layer;
the first glass and the display film are adhered through the adhesive layer, the display film and the touch film are adhered through the adhesive layer, and the touch film and the second glass are adhered through the adhesive layer; or
the second glass and the display film are adhered through the adhesive layer, the display film and the touch film are adhered through the adhesive layer, and the touch film and the first glass are adhered through the adhesive layer.

4. The touch laminated glass according to claim 3, wherein an area of the display film is smaller than that of the adhesive layer.

5. The touch laminated glass according to claim 3, wherein an area of the touch film is smaller than that of the adhesive layer.

6. The touch laminated glass according to claim 5, wherein if the touch film is disposed close to the first glass, a distance between an edge of the touch film and an edge of the first glass is 5 millimeters to 25 millimeters; and
if the touch film is disposed close to the second glass, a distance between the edge of the touch film and an edge of the second glass is 5 millimeters to 25 millimeters.

7. The touch laminated glass according to claim 1, wherein if a projection mode of the projector is a front projection mode, the display film is configured as a display film for front projection use.

8. The touch laminated glass according to claim 1, wherein if a projection mode of the projector is a rear projection mode, the display film is configured as a scattering film or a polymer dispersed liquid crystal film.

9. The touch laminated glass according to claim 1, wherein the touch film further comprises an electrode; and
the electrode is disposed inside the touch film and configured to transmit the capacitance signal to the control panel.

10. The touch laminated glass according to claim 9, wherein the touch film further comprises a shielding layer; and
the shielding layer is disposed on a side of the electrode and configured to shield a capacitance signal formed by the user on a side close to the shielding layer and away from the electrode.

11. The touch laminated glass according to claim 9, wherein the electrode comprises a one-side electrode and has a width between 0.1 millimeter and 15 millimeters.

12. The touch laminated glass according to claim 9, further comprising a light-shielding coating; and
the light-shielding coating is configured to cover a position where the electrode is located.

13. The touch laminated glass according to claim 1, wherein the touch film comprises a touch function area; and
the touch function area is configured to form a capacitance signal based on a touch operation of a user and send the capacitance signal to the control panel.

14. The touch laminated glass according to claim 13, wherein the touch function area covers the whole transparent area or part thereof.

15. The touch laminated glass according to claim 1, wherein the touch film and the control panel are connected through a circuit board.

16. A touch laminated glass, comprising an outer glass, a touch glass and a display film disposed between the outer glass and the touch glass;
the display film is configured to display projection information projected by a projector; and
the touch glass is configured to form a capacitance signal based on a touch operation of a user and send the capacitance signal to a control panel.

17. A control apparatus, comprising a touch laminated glass, a projector and a control panel;
the touch laminated glass is communicatively connected to the control panel, and the control panel is communicatively connected to the projector;
the touch laminated glass is configured to form a capacitance signal based on a touch operation of a user and send the capacitance signal to the control panel;
the control panel is configured to process the capacitance signal and send obtained projection information to the projector; and
the projector is configured to project the projection information to the touch laminated glass.

18. The control apparatus according to claim 17, wherein the touch laminated glass and the control panel are connected through a circuit board.

19. A control system, comprising a control apparatus and a vehicle-computer system which are disposed on a vehicle body;
the control apparatus comprises a touch display vehicle window, and the touch display vehicle window comprises the touch laminated glass according to any one of claims 1 to 16;
the projector of the control apparatus is configured to project projection information to the touch display vehicle window; and
the vehicle-computer system is configured to monitor a vehicle parameter.

20. The control system according to claim 19, wherein the control apparatus sends a generated vehicle parameter acquisition request to the vehicle-computer system;
the vehicle-computer system sends, in response to the vehicle parameter acquisition request, vehicle parameter information to the projector; and
the projector projects the vehicle parameter information to the touch display vehicle window.

21. The control system according to claim 19, wherein the vehicle-computer system inquires, in response to a projector turn-on instruction, whether the touch display vehicle window is in a raised state; if the touch display vehicle window is in the raised state, the turn-on instruction is sent to the projector to turn on the projector; if the touch display vehicle window is in a not raised state, the touch display vehicle window is controlled to rise until the touch display vehicle window is in the raised state, and the turn-on instruction is sent to the projector to turn on the projector.

22. The control system according to claim 21, wherein when the projector is in a turn-on state, if the touch display vehicle window is in a descended state, the vehicle-computer system is further configured to send a light-emission pause instruction to the projector, so as to pause light emitted from the projector.

23. The control system according to claim 22, wherein the vehicle-computer system is further configured to send a sound keeping instruction to the projector, so as to keep normal working of a speaker of the projector.

24. The control system according to claim 19, wherein the vehicle parameter comprises a vehicle on-off state, and the vehicle on-off state comprises a locked state, an unlocked state and a driving state; if a vehicle is changed from the locked state to the unlocked state, the vehicle-computer system sends a welcome turn-on instruction to the projector; and
the projector projects, in response to the welcome turn-on instruction, a preset welcome image to the touch display vehicle window.

25. The control system according to claim 24, wherein if the vehicle is changed from the unlocked state to the driving state, the vehicle-computer system sends a welcome turn-off instruction to the projector; and
the projector stops, in response to the welcome turn-off instruction, projecting the welcome image to the touch display vehicle window.

26. The control system according to claim 19, further comprising a user terminal which is communicatively connected to the vehicle-computer system;
the vehicle-computer system sends, in response to the welcome turn-on instruction sent by the user terminal, the welcome turn-on instruction to the projector, wherein the welcome turn-on instruction is input by the user through the user terminal; and
the projector projects, in response to the welcome turn-on instruction, a preset welcome image to the touch display vehicle window in a rear projection mode.

27. A control method, comprising:
performing signal processing on a capacitance signal generated by a touch laminated glass to obtain projection information, wherein the capacitance signal is formed by the touch laminated glass based on a touch operation of a user; and
sending the projection information to a projector, so that the projector projects the projection information to the touch laminated glass.

28. The control method according to claim 27, wherein the capacitance signal comprises an unlocking signal, and the projection information comprises a welcome image; and
the performing signal processing on the capacitance signal generated by the touch laminated glass to obtain the projection information comprises:
generating, in response to the unlocking signal, a welcome image.

29. The control method according to claim 28, further comprising:
sending the unlocking signal to a vehicle-computer system, so that the vehicle-computer system unlocks a vehicle.

30. The control method according to claim 27, wherein the capacitance signal comprises an unlocking request, and the projection information comprises a preset unlocking code; and
the performing signal processing on the capacitance signal generated by the touch laminated glass to obtain the projection information comprises:
acquiring, in response to the unlocking request, a preset unlocking code.

31. A control panel, comprising:
a signal processing unit configured to process a capacitance signal generated by a touch laminated glass to obtain projection information, wherein the capacitance signal is formed by the touch laminated glass based on a touch operation of a user; and
a sending unit configured to send the projection information to a projector, so that the projector projects the projection information to the touch laminated glass.

32. A computer-readable medium storing a computer program, wherein when executed by a processor, the program implements the control method according to any one of claims 27 to 30.

33. A computer device, comprising a memory and a processor, wherein the memory is configured to store information including program instructions, and the processor is configured to control the execution of the program instructions, wherein when loaded and executed by the processor, the program instructions implement the control method according to any one of claims 27 to 30.

34. A computer program product comprising a computer program/instruction, wherein when executed by a processor, the computer program/instruction implements the control method according to any one of claims 27 to 30.
